# EUROPÄISCHE PATENTSCHRIFT

(11) **EP 3 570 704 B1**
(45) Veröffentlichungstag und Bekanntmachung des Hinweises auf die Patenterteilung: **16.08.2023**
(21) Anmeldenummer: 17803905.3
(22) Anmeldetag: 21.11.2017
(51) Int. Cl.: A46B 13/00, A46B 13/02, B23Q 11/00

(54) **WERKZEUG ZUR BEARBEITUNG VON OBERFLÄCHEN, KANTENBEREICHEN UND KONTUREN**
TOOL FOR TREATING SURFACES, EDGE REGIONS AND CONTOURS
OUTIL DESTINÉ À L'USINAGE DE SURFACES, DE ZONES D'ARÊTE ET DE CONTOURS

(30) Priorität: 20.01.2017 CH 692017
(43) Veröffentlichungstag der Anmeldung: 27.11.2019
(73) Patentinhaber: Vogel, Josef, 6048 Horw (CH)
(72) Erfinder: Vogel, Josef, 6048 Horw (CH)
(74) Vertreter: Troesch Scheidegger Werner AG
(86) Internationale Anmeldenummer: PCT/EP2017/079928
(87) Internationale Veröffentlichungsnummer: WO 2018/133979

(56) Entgegenhaltungen:
- WO-A1-2013/125938
- CH-A- 390 869
- CH-A- 419 888
- DE-C- 174 826
- DE-U1- 29 617 206
- FR-A- 1 099 523
- GB-A- 834 598
- US-A- 2 353 125
- US-A- 5 860 179
- US-A1- 2014 366 913

## Beschreibung

### Technisches Gebiet der Erfindung

Die vorliegende Erfindung betrifft ein Werkzeug zur Bearbeitung von Oberflächen, Kantenbereichen und Konturen mit einem um eine Werkzeugachse drehbaren Basiskörper, einer Vielzahl von flexiblen Bearbeitungsmitteln, welche an einem Umfang des Basiskörpers angeordnet sind, wobei diese Bearbeitungsmittel stabförmig ausgebildet und zueinander beabstandet angeordnet sind und sich im Wesentlichen vom Umfang des Basiskörpers radial nach aussen erstrecken. Weiter betrifft die Erfindung eine Werkstückaufnahme zur Verwendung mit einem erfindungsgemässen Werkzeug, sowie ein Verfahren zur Bearbeitung von Werkstücken mit einem erfindungsgemässen Werkzeug.

### Beschreibung des Standes der Technik

Aus dem Stand der Technik sind Werkzeuge zur Bearbeitung von Oberflächen, Kantenbereichen und Konturen bekannt, bei welchen eine Vielzahl von flexiblen Bearbeitungsmitteln am Umfang eines um eine Achse drehbaren Basiskörpers angeordnet ist. Die flexiblen Bearbeitungsmittel sind meist stabförmig ausgebildet, zueinander beabstandet angeordnet und erstrecken sich im Wesentlichen vom Basiskörper radial nach aussen. Beispielsweise ist das Werkzeug eine Bürste und die flexiblen Bearbeitungsmittel sind zum Beispiel Borsten, Borstenbündel, Filamente oder Filamentbündel.

Die CH 390 869 A offenbart eine Rotationsbürste mit Bearbeitungsmittel, welche zwischen den Scheiben verklebt und gepresst sind. Die CH 390 869 A offenbart ein Werkzeug gemäss dem Oberbegriff des Anspruchs 1.

### Zusammenfassende Beschreibung der Erfindung

Eine Aufgabe der vorliegenden Erfindung besteht darin, ein verbessertes Werkzeug zur Bearbeitung von Oberflächen, Kantenbereichen und Konturen bereitzustellen, sowie ein Verfahren zu dessen Herstellung. Weiter soll eine verbesserte Werkstückaufnahme zur Verwendung mit dem verbesserten Werkzeug bereitgestellt werden, sowie ein Verfahren zur Bearbeitung von Werkstücken mit einem erfindungsgemässen Werkzeug.

Eine solche Aufgabe löst ein Werkzeug mit den Merkmalen des Anspruchs 1. Weitere Ausführungsformen des Werkzeuges, ein Verfahren zu dessen Herstellung, sowie eine Werkstückaufnahme zur Verwendung mit einem solchen Werkzeug und ein Verfahren zur Bearbeitung von Werkstücken mit einem erfindungsgemässen Werkzeug sind durch die Merkmale von weiteren Ansprüchen definiert.

Ein erfindungsgemässes Werkzeug zur Bearbeitung von Oberflächen, Kantenbereichen und Konturen weist mindestens einen um eine Werkzeugachse drehbaren scheibenförmigen Basiskörper mit einer Vielzahl von flexiblen Bearbeitungsmitteln auf. Die Bearbeitungsmittel sind stabförmig ausgebildet und an einem Umfang des Basiskörpers angeordnet. Die Bearbeitungsmittel sind voneinander beabstandet angeordnet und erstrecken sich im Wesentlichen vom Umfang des Basiskörpers radial nach aussen. In der Richtung der Werkzeugachse sind mindestens zwei Scheiben angeordnet, zwischen welchen die Bearbeitungsmittel gleitend angeordnet sind, so dass die flexiblen Bearbeitungsmittel in ihrer Bewegung in der Umfangsrichtung nicht behindert sind.

Die Scheiben haben den Vorteil, dass die flexiblen Bearbeitungsmittel in unterschiedlichen Belastungsrichtungen andere Nachgiebigkeitseigenschaften aufweisen. Mit der seitlichen Anordnung der Scheiben sind die flexiblen Bearbeitungsmittel in ihrer Bewegung in der Umfangsrichtung nicht behindert. Quer zur Umfangsrichtung, in der Richtung der Werkzeugachse ist die Bewegung der flexiblen Bearbeitungsmittel durch die Scheiben eingeschränkt. Bei Krafteinwirkung sind die flexiblen Bearbeitungsmittel somit in der Umfangsrichtung im Wesentlichen über ihre gesamte über den Umfang des Basiskörpers hinausragende Länge verformbar. In der Richtung der Werkzeugachse sind sie im Wesentlichen über die Länge verformbar, welche über die Scheiben hinausragt. Somit bewirken die Scheiben, dass die flexiblen Bearbeitungsmittel in unterschiedlichen Richtungen bezüglich des Werkzeuges unterschiedlich steif bzw. nachgiebig sind.

Der scheibenförmige Basiskörper hat im Wesentlichen die Form einer Kreisscheibe, durch deren Zentrum sich die Werkzeugachse erstreckt.

Die flexiblen Bearbeitungsmittel sind beispielsweise Borsten, Borstenbündel, Filamente oder Filamentbündel, wobei ein Bündel eine Gruppierung von mehreren miteinander angeordneten Borsten oder Filamenten ist.

Flexible Bearbeitungsmittel bedeutet, dass sie unter Belastung eine elastische Bewegung vollziehen und bei einer Entlastung im Wesentlichen ihre ursprüngliche Form und Lage einnehmen.

Die mindestens zwei Scheiben, zwischen welchen die flexiblen Bearbeitungsmittel angeordnet sind, haben im Wesentlichen die Form einer Kreisscheibe oder eines Kreisringes. Somit ist die Länge der flexiblen Bearbeitungsmittel, welche über die Scheiben hinausragt im Wesentlichen konstant, wodurch sich eine konstante Steifigkeit der flexiblen Bearbeitungsmittel in der Richtung der Werkzeugachse entlang des Umfangs des Werkzeuges ergibt.

Alternativ können die Scheiben Vielecke sein, beispielsweise mit drei, vier, fünf, sechs oder mehr Ecken.

Somit ergeben sich bei der Kombination von einem Basiskörper mit einer Kreisscheibenform und Scheiben mit einer Vieleckform auch unterschiedliche Steifigkeiten in der Richtung der Werkzeugachse entlang des Umfangs des Werkzeuges.

In einer Ausführungsform definiert die Länge von der Werkzeugachse bis zum äussersten Umfang der Scheiben einen Aussendurchmesser und die Länge von der Werkzeugachse bis zum äussersten Ende der flexiblen Bearbeitungsmittel definiert einen Aussendurchmesser, wobei der Aussendurchmesser der Scheiben kleiner ausgebildet ist als Aussendurchmesser der flexiblen Bearbeitungsmittel.

In einer weiteren Ausführungsform stimmt ein Innendurchmesser der Scheiben im Wesentlichen mit dem Umfang des Basiskörpers überein. Die Scheiben werden dadurch bezüglich des Basiskörpers mit diesem zentriert.

In einer anderen Ausführungsform sind an Stirnseiten des Basiskörpers Ausnehmungen zur Aufnahme der Scheiben vorgesehen, wobei ein Innendurchmesser der Ausnehmungen im Wesentlichen mit einem Innendurchmesser der Scheiben übereinstimmt. Die Scheiben werden dadurch bezüglich des Basiskörpers mit diesem zentriert. Zusätzlich erlauben die Ausnehmungen die Ausgestaltung von Scheibenringen mit einer grösseren Ringtiefe. Durch die grössere Tiefe ist eine Scheibe weniger steif bezüglich einer Belastung in der Richtung der Werkzeugachse als eine Scheibe mit gleicher Dicke und geringerer Tiefe.

Optional können die Ausnehmungen Erhöhungen aufweisen, welche in entsprechende Ausnehmungen in den Scheiben eingreifen können, wodurch ein Verdrehen der Scheiben bezüglich des Basiskörpers während eines Einsatzes des Werkzeuges verhindert werden kann.

In einer Ausführungsform sind die mindestens zwei Scheiben mindestens zwei erste Scheiben und mindestens zwei zweite Scheiben, wobei die Bearbeitungsmittel zwischen den mindestens zwei ersten Scheiben angeordnet sind und wobei die mindestens zwei ersten Scheiben zwischen den mindestens zwei zweiten Scheiben angeordnet sind. Die Verwendung von mehreren unterschiedlichen Scheiben erlaubt die optimale Einstellung des Steifigkeitsverhaltens der flexiblen Bearbeitungsmittel in der Richtung der Werkzeugachse.

In einer weiteren Ausführungsform ist der Aussendurchmesser der ersten Scheiben kleiner, gleichgross oder grösser als der Aussendurchmesser der zweiten Scheiben. Dies hat den Vorteil, dass sich durch eine unterschiedliche Staffelung der Scheiben ein unterschiedliches Steifigkeitsverhalten bezüglich der Auslenkung der flexiblen Bearbeitungsmittel in der Richtung der Werkzeugachse realisieren lässt. Zum Beispiel kann eine spezielle Zunahme der Steifigkeit mit der zunehmenden Auslenkung der flexiblen Bearbeitungsmittel in der Richtung der Werkzeugachse realisiert werden. Die Zunahme kann beispielsweise linear, parabolisch, hyperbolisch oder kreisförmig sein. Um dies zu erreichen kann die Staffelung der Grösse der Aussendurchmesser der Scheiben beispielsweise linear, parabolisch, hyperbolisch oder kreisförmig sein.

Alternativ oder zusätzlich kann die Dicke der Scheiben verändert werden. Dadurch lassen sich die seitlichen Abstände in der Richtung der Werkzeugachse zwischen den flexiblen Bearbeitungsmitteln und den Scheiben einstellen. Je grösser der Abstand ist, desto mehr müssen die flexiblen Bearbeitungsmittel in der Richtung der Werkzeugachse ausgelenkt werden, bevor sie mit den Scheiben in Kontakt kommen und dadurch das Steifigkeitsverhalten der flexiblen Bearbeitungsmittel beeinflussen können.

Durch die Dicke der Scheiben kann das Steifigkeitsverhalten einer Scheibe festgelegt werden. Eine dünne Scheibe ist weniger Steif in der Richtung der Werkzeugachse als eine dicke Scheibe gleichen Materials.

In einer Ausführungsform weist das Werkzeug einen Stapel von mindestens zwei auf einer gemeinsamen Werkzeugachse nebeneinander angeordneten Basiskörpern auf, wobei die am Umfang jedes Basiskörpers angeordneten Bearbeitungsmittel jeweils zwischen mindestens zwei Scheiben angeordnet sind. Diese Bauweise erlaubt die Anordnung einer beliebigen Anzahl von Basiskörpern, wodurch eine beliebige Breite des Werkzeuges realisierbar ist. Die Breite des Werkzeuges kann somit auf die geometrischen Abmessungen des zu bearbeitenden Werkstückes angepasst werden.

Die flexiblen Bearbeitungsmittel der jeweiligen Basiskörper können miteinander fluchtend bezüglich ihrer Ausrichtung am Umfang sein oder sie können versetzt zueinander ausgerichtet sein. Alternativ können sie nicht miteinander ausgerichtet sein und eine willkürliche Ausrichtung aufweisen.

Beispielsweise ist das Material der mindestens zwei Scheiben nachgiebig oder steif und kann einzeln oder in Kombination aus der Gruppe von Metall, Kunststoff, Gummi, Keramik, Verbundwerkstoff oder Papier ausgewählt werden. Dies erlaubt eine günstige Materialpaarung von den flexiblen Bearbeitungsmitteln mit den Scheiben und von den Scheiben untereinander. Beispielsweise kann eine Materialpaarung gewählt werden, welche in guten Gleiteigenschaften resultiert.

In einer Ausführungsform sind die mindestens zwei Scheiben zwischen den Bearbeitungsmitteln eines Basiskörpers und den Bearbeitungsmitteln eines zu diesem benachbarten Basiskörper zumindest in einfacher Anzahl vorgesehen sind. Somit können sich zwei benachbarte Basiskörper und die dazugehörigen Bearbeitungsmittel die dazwischen angeordneten Scheiben teilen, wodurch weniger Scheiben benötigt werden und wodurch eine geringere Werkzeugbreite realisierbar ist.

In einer alternativen Ausführungsform sind die ersten Scheiben in mehrfacher Anzahl vorgesehen sind und die zweiten Scheiben in einfacher Anzahl. Bei einem identischen Aufbau der einzelnen Basiskörper mit Bearbeitungsmitteln und den entsprechenden Scheiben, kann beispielsweise bei einem gestaffelten Aufbau der Scheiben die äusserste Scheibe einer Mehrzahl von gestaffelten Scheiben, welche einem ersten Basiskörper zugeordnet sind, gleichzeitig die äusserste Scheibe einer Mehrzahl von gestaffelten Scheiben sein, welche einem zum ersten Basiskörper benachbarten Basiskörper zugeordnet sind. Dies hat den Vorteil, dass weniger Scheiben benötigt werden, was einerseits günstiger ist und andererseits in geringeren Abständen zwischen benachbarten flexiblen Bearbeitungsmitteln resultiert.

In einer Ausführungsform weist der Basiskörper eine Durchgangsbohrung konzentrisch zur Werkzeugachse auf. Dies erlaubt die einfache Anordnung mehrerer Basiskörper auf einer gemeinsamen Achse. Mit bekannten Spannelementen lassen sich die einzelnen Basiskörper einfach gegeneinander verspannen. Beispielsweise kann auf der Welle ein Aussengewinde vorgesehen sein und die Basiskörper können mit einer Gewindemutter gegeneinander verspannt werden.

Ein Verfahren zur Herstellung eines erfindungsgemässen Werkzeuges zur Bearbeitung von Oberflächen, Kantenbereichen und Konturen weist die folgenden Schritte auf:
- Bereitstellen mindestens eines scheibenförmigen Basiskörpers, welcher um eine Werkzeugachse drehbar ist,
- Anordnen einer Vielzahl von flexiblen Bearbeitungsmitteln an einem Umfang des Basiskörpers, wobei diese Bearbeitungsmittel stabförmig ausgebildet und voneinander beabstandet angeordnet sind und sich im Wesentlichen vom Umfang des Basiskörpers radial nach aus erstrecken,
- Anordnen von mindestens zwei Scheiben in der Richtung der Werkzeugachse, zwischen welchen die Bearbeitungsmittel angeordnet werden. Ein solches Verfahren ist unkompliziert und kostengünstig.

In einer weiteren Ausführungsform werden mindestens zwei erste Scheiben und mindestens zwei zweite Scheiben angeordnet, wobei die Bearbeitungsmittel zwischen den mindestens zwei ersten Scheiben angeordnet werden und wobei die mindestens zwei ersten Scheiben zwischen den mindestens zwei zweiten Scheiben angeordnet werden.

In einer Ausführungsform werden mindestens zwei Basiskörper auf der gemeinsamen Werkzeugachse nebeneinander angeordnet, wobei die am Umfang jedes Basiskörpers angeordneten Bearbeitungsmittel jeweils zwischen mindestens zwei Scheiben angeordnet werden.

In einer weiteren Ausführungsform wird zwischen zwei ersten Scheiben, welche zwei benachbarten Basiskörper zugeordnet sind, jeweils eine zweite Scheibe angeordnet.

Eine nicht beanspruchte Werkstückaufnahme zur Verwendung mit einem erfindungsgemässen Werkzeug weist einen Basiskörper auf, an welchem eine Lagervorrichtung und eine Spannvorrichtung angeordnet sind. Die Lagervorrichtung weist zwei zueinander parallele, im Wesentlichen zylinderförmige Lagerkörper auf, wobei jeder der Lagerkörper um eine entsprechende Drehachse drehbar ist. Mindestens einer der Lagerkörper ist durch einen entsprechenden Antrieb um die entsprechende Drehachse drehbar. Die Spannvorrichtung weist einen Spannriemen auf, welcher um die beiden Lagerkörper geführt ist und welcher mit einer Spannrolle, welche um eine Spannachse drehbar gelagert ist, gegen die beiden Lagerkörper verspannbar ist. Die Lagervorrichtung und die Spannvorrichtung sind derart ausgebildet, dass ein zu bearbeitendes Werkstück zwischen den beiden Lagerkörpern und dem Spannriemen drehbar angeordnet und verspannt werden kann. Durch diese Bauweise wird erreicht, dass das zu bearbeitende Werkstück auf einer Seite lediglich durch den Spannriemen verdeckt ist und ansonsten über die gesamte Länge frei zugänglich ist. Erst diese freie Zugänglichkeit erlaubt den Einsatz des erfindungsgemässen Werkzeuges.

In einer Ausführungsform weist die Lagervorrichtung weiter Stützrollen auf, welche mit den Lagerkörpern in Kontakt sind und welche den auf die beiden Lagekörper wirkenden resultierenden Kräften entgegenwirken können, welche aus der Verspannung des Spannriemens gegen die beiden Lagerkörper resultieren. Die Stützrollen verhindern, dass die Lagerkörper unter Belastung aus ihrer ursprünglichen Lage ausgelenkt werden. Dies ist vorteilhaft bei langen Lagerkörpern, welche für lange Werkstücke benötigt werden.

In einer weiteren Ausführungsform ist die Werkstückaufnahme um mindestens eine Schwenkachse schwenkbar ausgebildet ist. Damit lässt sich ein relativer Winkel zwischen dem zu bearbeitenden Werkstück und dem bearbeitenden Werkzeug einstellen. Die Werkstückaufnahme kann zusätzlich noch verschiebbar ausgebildet sein. Altern oder zusätzlich kann das Werkzeug schwenkbar ausgebildet sein. Beispielsweise kann das Werkzeug auf einem Roboterarm angeordnet sein.

Bei einem Verfahren zur Bearbeitung von Werkstücken mit einem erfindungsgemässen Werkzeug, erfolgt während der Bearbeitung eine Relativbewegung zwischen dem Werkzeug und der Werkstückaufnahme in der Richtung der Werkzeugachse über die gesamte Werkzeugbreite. Dies führt zu einer gleichmässigeren Bearbeitung des Werkstückes und zu einer gleichmässigeren Abnutzung des Werkzeuges, bzw. der flexiblen Bearbeitungsmittel des Werkzeuges.

In einer Ausführungsform wird das Werkstück während der Bearbeitung in der Werkstückaufnahme gedreht. Durch das Drehen kann eine optimale Ausrichtung der zu bearbeitenden Oberfläche, des zu bearbeitenden Kantenbereiches oder der zu bearbeitenden Kontur bezüglich dem Werkzeug erzielt werden, was zu optimalen Bearbeitungsresultaten führt.

In einer weiteren Ausführungsform wird als erstes eine relative Schwenkbewegung zwischen dem Werkzeug und der Werkstückaufnahme ausgeführt. Dies hat den Vorteil, dass vor dem Kontakt des Werkzeuges mit dem Werkstück deren relative Ausrichtung zueinander stattfindet, was zu besseren Bearbeitungsresultaten führt.

### Kurzbeschreibung der Zeichnungen

Ausführungsbeispiele der vorliegenden Erfindung werden nachstehend anhand von Figuren noch näher erläutert. Es zeigen
Fig. 1 eine perspektivische Darstellung einer Ausführungsform eines erfindungsgemässen Werkzeuges;
Fig. 2 eine Teilschnittansicht durch ein flexibles Bearbeitungsmittel des Werkzeuges der Figur 1;
Fig. 3 eine Teilseitenansicht des Werkzeuges der Figur 1;
Fig. 4 eine Schnittansicht durch die Werkzeugachse des Werkzeuges der Figur 1; und
Fig. 5 eine perspektivische Darstellung einer Werkstückaufnahme zur Verwendung mit einem erfindungsgemässen Werkzeug.

### Ausführliche Beschreibung der Erfindung

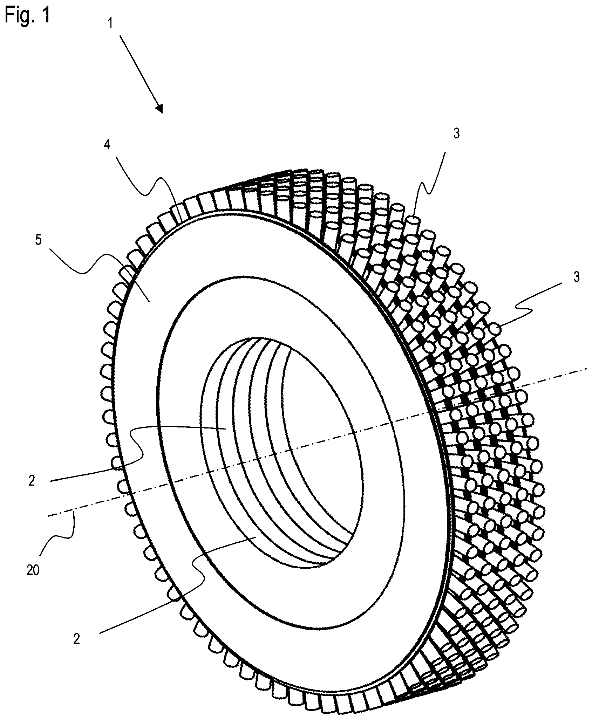

Die Figur 1 zeigt eine perspektivische Darstellung einer Ausführungsform eines erfindungsgemässen Werkzeuges 1 zur Bearbeitung von Oberflächen, Kantenbereichen und Konturen mit mehreren um eine Werkzeugachse 20 drehbaren scheibenförmigen Basiskörpern 2. Jeder Basiskörper 2 hat eine Vielzahl von flexiblen Bearbeitungsmitteln 3, welche am Umfang 21 des jeweiligen Basiskörpers 2 angeordnet sind. Die Bearbeitungsmittel 3 sind stabförmig ausgebildet und voneinander beabstandet angeordnet und erstrecken sich im Wesentlichen vom Umfang 21 des jeweiligen Basiskörpers 2 radial nach aussen. In der Richtung der Werkzeugachse 20 sind mindestens zwei Scheiben 4, 5 angeordnet, zwischen welchen die Bearbeitungsmittel 3 angeordnet sind.

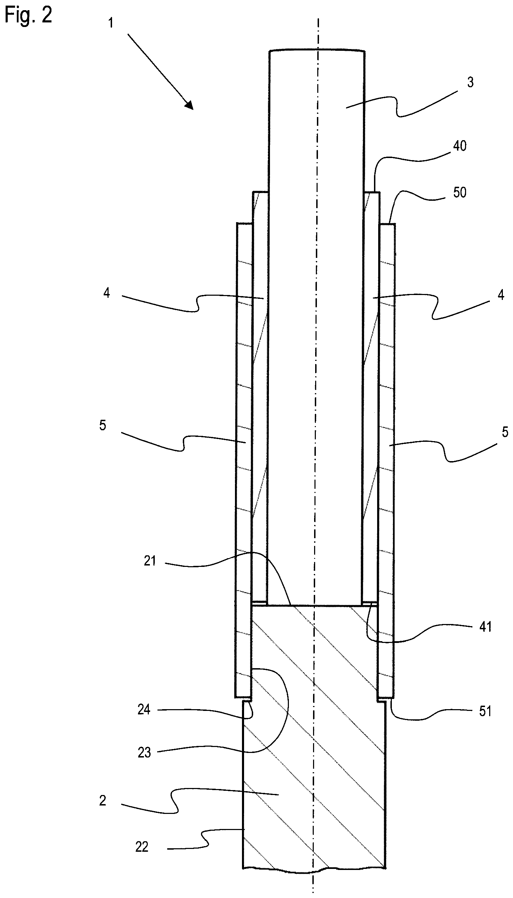

Die Figur 2 zeigt eine Teilschnittansicht durch ein flexibles Bearbeitungsmittel 3 des Werkzeuges 1 der Figur 1. Seitlich benachbart zum flexiblen Bearbeitungsmittel 3 ist jeweils eine erste Scheibe 4 angeordnet, deren Aussendurchmesser 40 vom flexiblen Bearbeitungsmittel 3 überragt wird und deren Innendurchmesser 41 im Wesentlichen mit dem Aussendurchmesser 21 des Basiskörpers 2 übereinstimmt. Der Basiskörper 2 weist an seinen Stirnseiten 22 Ausnehmungen 23 auf. Diese Ausnehmungen 23 erstrecken sich von einem Innendurchmesser 24 bis zum Aussendurchmesser 21 des Basiskörpers 2. Seitlich benachbart zu den ersten Scheiben 4 ist jeweils eine zweite Scheibe 5 angeordnet, deren Aussendurchmesser 50 kleiner ist als der Aussendurchmesser 40 der ersten Scheiben 4 und deren Innendurchmesser 51 im Wesentlichen mit dem Innendurchmesser 24 der entsprechenden Ausnehmung 23 im Basiskörper 2 übereinstimmt.

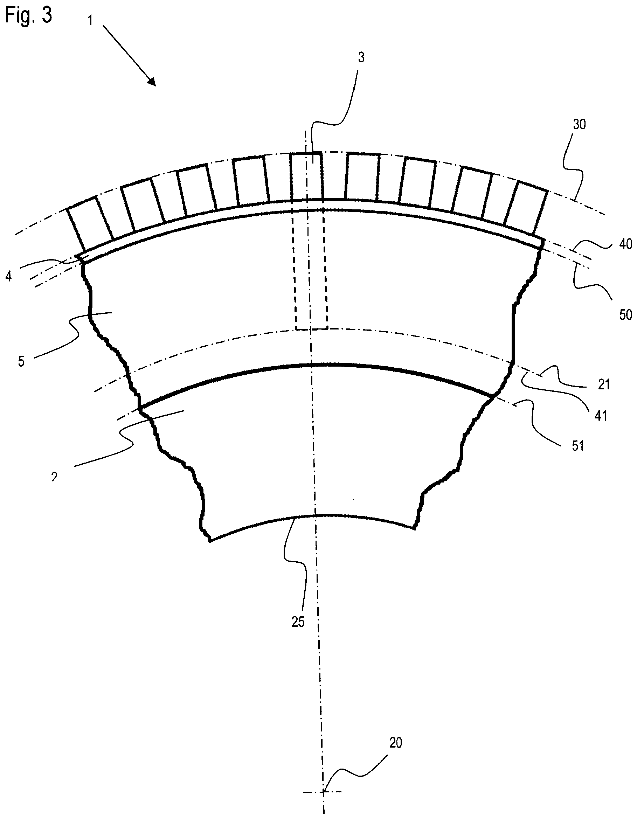

Die Figur 3 zeigt eine Teilseitenansicht des Werkzeuges 1 der Figur 1. Die Länge von der Werkzeugachse 20 bis zum äussersten Umfang der Scheiben 4, 5 definiert einen jeweiligen Aussendurchmesser 40, 50. Die Länge von der Werkzeugachse 20 bis zum äussersten Ende der flexiblen Bearbeitungsmittel 3 definiert einen Aussendurchmesser 30. Der Aussendurchmesser 40, 50 der Scheiben 4, 5 ist kleiner ausgebildet als Aussendurchmesser 30 der flexiblen Bearbeitungsmittel 3. Der Basiskörper 2 ist einer Ringscheibe mit einem Aussendurchmesser 21 und mit einem Innendurchmesser 25. Die ersten Scheiben 4 sind Ringscheiben mit einem Aussendurchmesser 40 und mit einem Innendurchmesser 41. Die zweiten Scheiben 5 sind Ringscheiben mit einem Aussendurchmesser 50 und mit einem Innendurchmesser 51.

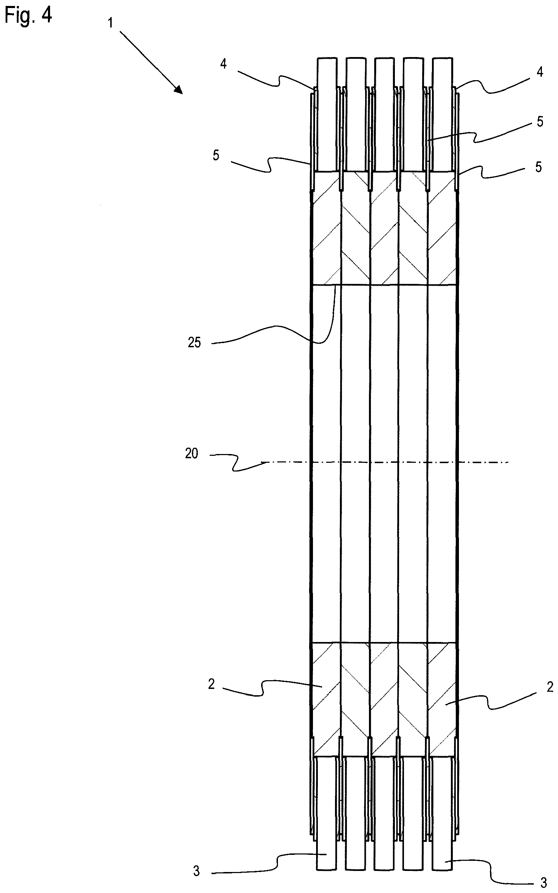

Die Figur 4 zeigt eine Schnittansicht durch die Werkzeugachse 20 des Werkzeuges 1 der Figur 1. Das Werkzeug 1 weist einen Stapel von mehreren auf einer gemeinsamen Werkzeugachse 20 nebeneinander angeordneten Basiskörpern 2 auf. Die am Umfang 21 jedes Basiskörpers 2 angeordneten Bearbeitungsmittel 3 sind jeweils zwischen zwei ersten Scheiben 4 angeordnet und die zwei ersten Scheiben 4 sind zwischen zwei zweiten Scheiben 5 angeordnet. Die ersten Scheiben 4 sind in mehrfacher Anzahl vorgesehen und die zweiten Scheiben 5 sind in einfacher Anzahl vorgesehen. Das heisst, dass die zweiten Scheiben 5, welche einem Basiskörper 2 zugeordnet sind, gleichzeitig einem zu diesem Basiskörper 2 benachbarten Basiskörper 2 zugeordnet sind. Die äussersten Abmessungen der flexiblen Bearbeitungsmittel 3, sowie die Innendurchmesser 25 der jeweiligen Basiskörper 2 sind miteinander fluchtend in der Richtung der Werkzeugachse 20.

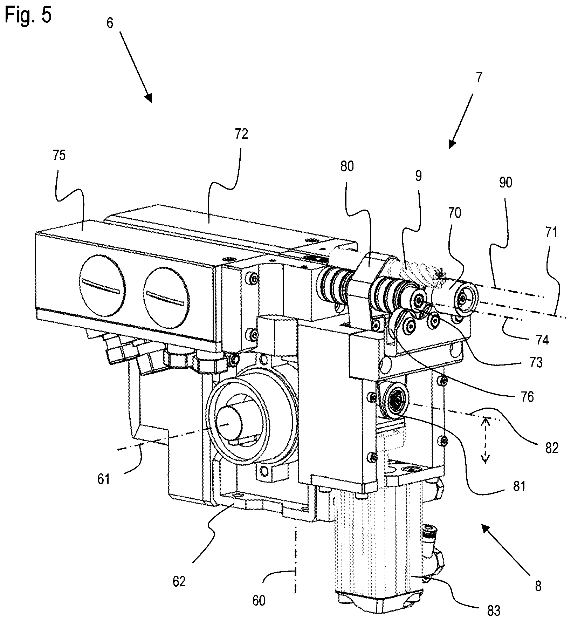

Die Figur 5 zeigt eine perspektivische Darstellung einer Werkstückaufnahme 6 zur Verwendung mit einem erfindungsgemässen Werkzeug. Die Werkstückaufnahme 6 weist einen Basiskörper 2 auf, an welchem eine Lagervorrichtung 7 und eine Spannvorrichtung 8 angeordnet sind. Die Lagervorrichtung 7 weist zwei zueinander parallele, im Wesentlichen zylinderförmige Lagerkörper 70, 73 auf, wobei jeder der Lagerkörper 70, 73 um eine entsprechende Drehachse 71, 74 drehbar ist. Mindestens einer der Lagerkörper 70, 73 ist durch einen entsprechenden Antrieb 72, 75 um die entsprechende Drehachse 71, 74 drehbar. Die Spannvorrichtung 8 weist einen Spannriemen 80 auf, welcher um die beiden Lagerkörper 70, 73 geführt ist und welcher mit einer Spannrolle 81, welche um eine Spannachse 82 drehbar gelagert ist, gegen die beiden Lagerkörper 70, 73 verspannbar ist. Die Lagervorrichtung 7 und die Spannvorrichtung 8 sind derart ausgebildet, dass ein zu bearbeitendes Werkstück 9 zwischen den beiden Lagerkörpern 70, 73 und dem Spannriemen 80 drehbar angeordnet und verspannt werden kann. Die Spannrolle 81 ist mittels eines Aktuators 83 bewegbar, wodurch zusammen mit dem Spannriemen 80 und den Lagerkörpern 70, 73 eine Spannwirkung erzeugbar ist. Die Lagervorrichtung 7 weist weiter Stützrollen 76 auf, welche mit den Lagerkörpern 70, 73 in Kontakt sind und welche den auf die beiden Lagekörper 70, 73 wirkenden resultierenden Kräften entgegenwirken können, welche aus der Verspannung des Spannriemens 80 gegen die beiden Lagerkörper 70, 73 resultieren. Dargestellt sind drei Stützrollen 76, wobei die mittlere der Stützrollen 76 auf beide Lagerkörper 70, 73 gleichzeitig einwirken kann. Die Werkstückaufnahme 6 weist eine erste Schwenkachse 60 und eine zur ersten Schwenkachse 60 senkrechte zweite Schwenkachse 61 auf, um welche die Werkzeugaufnahme 6 schwenkbar ist.

**Bezugszeichenliste**

| | | | |
|---|---|---|---|
| | | | |
| 1 | Werkzeug | 61 | zweite Schwenkachse |
| 2 | Basiskörper | 62 | Basiskörper |
| 20 | Werkzeugachse | 7 | Lagervorrichtung |
| 21 | Umfang | 70 | erster Lagerkörper |
| 22 | Stirnseite | 71 | erste Drehachse |
| 23 | Ausnehmung | 72 | erster Antrieb |
| 24 | Innendurchmesser | 73 | zweiter Lagerkörper |
| 25 | Durchgangsbohrung | 74 | zweite Drehachse |
| 3 | Bearbeitungsmittel | 75 | zweiter Antrieb |
| 30 | Aussendurchmesser | 76 | Stützrolle |
| 4 | erste Scheibe | 8 | Spannvorrichtung |
| 40 | Aussendurchmesser | 80 | Spannriemen |
| 41 | Innendurchmesser | 81 | Spannrolle |
| 5 | zweite Scheibe | 82 | Spannachse |
| 50 | Aussendurchmesser | 83 | Aktuator |
| 51 | Innendurchmesser | 9 | Werkstück |
| 6 | Werkstückaufnahme | 90 | Werkstückachse |
| 60 | erste Schwenkachse | | |

## Patentansprüche

1. Ein Werkzeug (1) zur Bearbeitung von Oberflächen, Kantenbereichen und Konturen mit mindestens einem um eine Werkzeugachse (20) drehbaren scheibenförmigen Basiskörper (2) und einer Vielzahl von flexiblen Bearbeitungsmitteln (3), welche an einem Umfang (21) des Basiskörpers (2) angeordnet sind, wobei die Bearbeitungsmittel (3) stabförmig ausgebildet und voneinander beabstandet angeordnet sind und sich im Wesentlichen vom Umfang (21) des Basiskörpers (2) radial nach aussen erstrecken, **dadurch gekennzeichnet, dass** in der Richtung der Werkzeugachse (20) mindestens zwei Scheiben (4, 5) angeordnet sind, zwischen welchen die Bearbeitungsmittel (3) gleitend angeordnet sind, so dass die flexiblen Bearbeitungsmittel (3) in ihrer Bewegung in der Umfangsrichtung nicht behindert sind.

2. Das Werkzeug (1) gemäss Anspruch 1, wobei die Länge von der Werkzeugachse (20) bis zum äussersten Umfang der Scheiben (4, 5) einen Aussendurchmesser (40, 50) definiert und wobei die Länge von der Werkzeugachse (20) bis zum äussersten Ende der flexiblen Bearbeitungsmittel (3) einen Aussendurchmesser (30) definiert, wobei der Aussendurchmesser (40, 50) der Scheiben (4, 5) kleiner ausgebildet ist als Aussendurchmesser (30) der flexiblen Bearbeitungsmittel (3).

3. Das Werkzeug (1) gemäss Anspruch 1 oder 2, wobei ein Innendurchmesser (41, 51) der Scheiben (4, 5) im Wesentlichen mit dem Umfang (21) des Basiskörpers (2) übereinstimmt.

4. Das Werkzeug (1) gemäss einem der Ansprüche 1 bis 3, wobei an Stirnseiten (22) des Basiskörpers (2) Ausnehmungen (23) zur Aufnahme der Scheiben (4, 5) vorgesehen sind, wobei ein Innendurchmesser (24) der Ausnehmungen (23) im Wesentlichen mit einem Innendurchmesser (41, 51) der Scheiben (4, 5) übereinstimmt.

5. Das Werkzeug (1) gemäss einem der Ansprüche 1 bis 4, wobei die mindestens zwei Scheiben (4, 5) mindestens zwei erste Scheiben (4) und mindestens zwei zweite Scheiben (5) sind, wobei die Bearbeitungsmittel (3) zwischen den mindestens zwei ersten Scheiben (4) angeordnet sind und wobei die mindestens zwei ersten Scheiben (4) zwischen den mindestens zwei zweiten Scheiben (5) angeordnet sind.

6. Das Werkzeug (1) gemäss Anspruch 5, wobei der Aussendurchmesser (40) der ersten Scheiben (4) kleiner, gleichgross oder grösser ist als der Aussendurchmesser (50) der zweiten Scheiben (5).

7. Das Werkzeug (1) gemäss einem der Ansprüche 1 bis 6, aufweisend einen Stapel von mindestens zwei auf einer gemeinsamen Werkzeugachse (20) nebeneinander angeordneten Basiskörpern (2), wobei die am Umfang (21) jedes Basiskörpers (2) angeordneten Bearbeitungsmittel (3) jeweils zwischen mindestens zwei Scheiben (4, 5) angeordnet sind.

8. Das Werkzeug (1) gemäss einem der Ansprüche 1 bis 7, wobei das Material der mindestens zwei Scheiben (4, 5) nachgiebig oder steif ist und einzeln oder in Kombination aus der Gruppe von Metall, Kunststoff, Gummi, Keramik, Verbundwerkstoff oder Papier ausgewählt werden kann.

9. Ein Verfahren zur Herstellung eines Werkzeuges (1) zur Bearbeitung von Oberflächen, Kantenbereichen und Konturen gemäss einem der Ansprüche 1 bis 8, aufweisend die Schritte:
- Bereitstellen mindestens eines scheibenförmigen Basiskörpers (2), welcher um eine Werkzeugachse (20) drehbar ist,
- Anordnen einer Vielzahl von flexiblen Bearbeitungsmitteln (3) an einem Umfang (21) des Basiskörpers (2), wobei diese Bearbeitungsmittel (3) stabförmig ausgebildet und voneinander beabstandet angeordnet sind und sich im Wesentlichen vom Umfang (21) des Basiskörpers radial nach aus erstrecken,
- Anordnen von mindestens zwei Scheiben (4, 5) in der Richtung der Werkzeugachse (20), zwischen welchen die Bearbeitungsmittel (3) angeordnet werden.

## Claims

1. A tool (1) for treating surfaces, edge regions and contours, comprising at least one disc-shaped base body (2) rotatable about a tool axis (20) and a plurality of flexible treating means (3) arranged on a periphery (21) of the base body (2), wherein the treating means (3) are rod-shaped and arranged at a distance from one another and extend substantially radially outwardly from the circumference (21) of the base body (2), **characterized in that** at least two discs (4, 5) are arranged in the direction of the tool axis (20), between which two discs (4, 5) the treating means (3) are slidingly arranged so that the flexible treating means (3) are not hindered in their movement in the circumferential direction.

2. The tool (1) according to claim 1, wherein the length from the tool axis (20) to the outermost circumference of the disks (4, 5) defines an outer diameter (40, 50) and wherein the length from the tool axis (20) to the outermost end of the flexible treating means (3) defines an outer diameter (30), wherein the outer diameter (40, 50) of the disks (4, 5) is made smaller than outer diameters (30) of the flexible treating means (3).

3. The tool (1) according to claim 1 or 2, wherein an inner diameter (41, 51) of the discs (4, 5) substantially coincides with the circumference (21) of the base body (2).

4. The tool (1) according to any one of claims 1 to 3, wherein recesses (23) for receiving the discs (4, 5) are provided on end faces (22) of the base body (2), wherein an inner diameter (24) of the recesses (23) substantially coincides with an inner diameter (41, 51) of the discs (4, 5).

5. The tool (1) according to any one of claims 1 to 4, wherein the at least two discs (4, 5) are at least two first discs (4) and at least two second discs (5), wherein the treating means (3) are arranged between the at least two first discs (4), and wherein the at least two first discs (4) are arranged between the at least two second discs (5).

6. The tool (1) according to claim 5, wherein the outer diameter (40) of the first discs (4) is smaller, equal or larger than the outer diameter (50) of the second discs (5) .

7. The tool (1) according to any one of claims 1 to 6, comprising a stack of at least two base bodies (2) arranged side by side on a common tool axis (20), wherein the treating means (3) arranged on the periphery (21) of each base body (2) are each arranged between at least two discs (4, 5).

8. The tool (1) according to any one of claims 1 to 7, wherein the material of the at least two discs (4, 5) is flexible or rigid and can be selected individually or in combination from the group of metal, plastic, rubber, ceramic, composite, or paper.

9. A method of manufacturing a tool (1) for machining surfaces, edge regions and contours according to any one of claims 1 to 8, comprising the steps of:
- Providing at least one disk-shaped base body (2), which is rotatable about a tool axis (20),
- arranging a plurality of flexible treating means (3) on a periphery (21) of the base body (2), said treating means (3) being rod-shaped and arranged spaced apart from each other and extending substantially radially outwardly from the periphery (21) of the base body,
- arranging at least two disks (4, 5) in the direction of the tool axis (20), between which the treating means (3) are arranged.

## Revendications

1. Un outil (1) pour l'usinage de surfaces, de zones d'arêtes et de contours avec au moins un corps de base (2) en forme de disque pouvant tourner autour d'un axe d'outil (20) et une pluralité de moyens d'usinage flexibles (3) qui sont disposés sur une périphérie (21) du corps de base (2), les moyens d'usinage (3) étant réalisés en forme de barre et disposés à distance les uns des autres et s'étendant sensiblement radialement vers l'extérieur à partir de la périphérie (21) du corps de base (2), **caractérisé en ce qu'**au moins deux disques (4, 5) sont disposés dans la direction de l'axe d'outil (20), entre lesquels les moyens d'usinage (3) sont disposés de manière coulissante, de sorte que les moyens d'usinage flexibles (3) ne sont pas gênés dans leur mouvement dans la direction périphérique.

2. L'outil (1) selon la revendication 1, dans lequel la longueur de l'axe d'outil (20) jusqu'à la périphérie extérieure des disques (4, 5) définit un diamètre extérieur (40, 50) et dans lequel la longueur de l'axe d'outil (20) jusqu'à l'extrémité extérieure des moyens d'usinage flexibles (3) définit un diamètre extérieur (30), le diamètre extérieur (40, 50) des disques (4, 5) étant plus petit que le diamètre extérieur (30) des moyens d'usinage flexibles (3).

3. L'outil (1) selon la revendication 1 ou 2, dans lequel un diamètre intérieur (41, 51) des disques (4, 5) coïncide sensiblement avec la circonférence (21) du corps de base (2) .

4. L'outil (1) selon l'une des revendications 1 à 3, dans lequel des évidements (23) sont prévus sur des faces frontales (22) du corps de base (2) pour recevoir les disques (4, 5), un diamètre intérieur (24) des évidements (23) coïncidant sensiblement avec un diamètre intérieur (41, 51) des disques (4, 5).

5. L'outil (1) selon l'une des revendications 1 à 4, dans lequel les au moins deux disques (4, 5) sont au moins deux premiers disques (4) et au moins deux deuxièmes disques (5), dans lequel les moyens d'usinage (3) sont disposés entre les au moins deux premiers disques (4) et dans lequel les au moins deux premiers disques (4) sont disposés entre les au moins deux deuxièmes disques (5).

6. L'outil (1) selon la revendication 5, dans lequel le diamètre extérieur (40) des premiers disques (4) est plus petit, égal ou plus grand que le diamètre extérieur (50) des seconds disques (5).

7. L'outil (1) selon l'une des revendications 1 à 6, présentant un empilement d'au moins deux corps de base (2) disposés côte à côte sur un axe d'outil commun (20), les moyens d'usinage (3) disposés à la périphérie (21) de chaque corps de base (2) étant respectivement disposés entre au moins deux disques (4, 5).

8. L'outil (1) selon l'une des revendications 1 à 7, dans lequel le matériau des au moins deux disques (4, 5) est souple ou rigide et peut être choisi, seul ou en combinaison, dans le groupe constitué par le métal, le plastique, le caoutchouc, la céramique, le composite ou le papier.

9. Procédé de fabrication d'un outil (1) pour l'usinage de surfaces, de zones d'arêtes et de contours selon l'une des revendications 1 à 8, comprenant les étapes suivantes :
- Fournir au moins un corps de base en forme de disque (2) qui peut tourner autour d'un axe d'outil (20),
- Disposer une pluralité de moyens d'usinage flexibles (3) sur une périphérie (21) du corps de base (2), ces moyens d'usinage (3) étant réalisés en forme de barre et disposés à distance les uns des autres et s'étendant sensiblement radialement vers l'extérieur depuis la périphérie (21) du corps de base,
- Disposer au moins deux disques (4, 5) dans la direction de l'axe de l'outil (20), entre lesquels les moyens d'usinage (3) sont disposés.
